**Europäisches Patentamt**

**European Patent Office**

**Office européen des brevets**

(19)

(11) Veröffentlichungsnummer: **0 099 491**
**B1**

(12)

# EUROPÄISCHE PATENTSCHRIFT

(45) Veröffentlichungstag der Patentschrift:
27.08.86

(21) Anmeldenummer: 83106275.7

(22) Anmeldetag: 28.06.83

(51) Int. Cl.⁴: **C 09 C 1/40,** C 09 C 1/00,
C 09 C 1/22, C 09 C 1/34,
C 09 C 1/04, C 09 C 1/02

(54) Anorganische Pigmente und Verfahren zu deren Herstellung.

(30) Priorität: 10.07.82 DE 3225897

(43) Veröffentlichungstag der Anmeldung:
01.02.84 Patentblatt 84/5

(45) Bekanntmachung des Hinweises auf die Patenterteilung:
27.08.86 Patentblatt 86/35

(84) Benannte Vertragsstaaten:
DE FR GB IT NL

(56) Entgegenhaltungen:
EP - A - 0 072 437
FR - A - 1 359 479

CHEMICAL ABSTRACTS, Band 91, Nr. 26 Dezember
1979, Seite 711 Nr. 221683f COLUMBUS, OHIO (US).
SHIGEO et al.: "Solid state reaction of cobalt (II) oxide
with alumina".

(73) Patentinhaber: Degussa Aktiengesellschaft,
Weissfrauenstrasse 9, D-6000 Frankfurt am Main 1 (DE)

(72) Erfinder: Fischer, Robert, Dr., Haydnstrasse 8,
D-6053 Obertshausen (DE)
Erfinder: de Ahna, Dieter, Dr.,
Wolfgang-Bochert-Strasse 11, D-6073 Egelsbach (DE)

## Beschreibung

Die Erfindung betrifft anorganische Pigmente, insbesondere kobalthaltige anorganische Pigmente mit Spinellstruktur und hoher Deckkraft und ein Verfahren zu deren Herstellung.

Ein erheblicher Teil anorganischer Buntpigmente leitet sich aus der kristallografischen Gruppe der Spinelle ab. Diese besitzen die allgemeine Formel $AB_2O_4$, worin A ein Element in seiner zweiwertigen Form und B ein Element in seiner dreiwertigen Form darstellen können. Der Fall, dass A für ein dreiwertiges Kation und B für ein zweiwertiges Kation steht, ist auch bekannt. Als zweiwertige Elemente kommen insbesondere die Elemente Co, Ni, Cu, Zn, Cd, Mg, Mn, Fe und als dreiwertiges Metallion Al, Cr, Fe, Ga, In, La, V in Frage.

In der Praxis bedeutet diese Vielfalt auch eine erhebliche Variationsbreite der Farbkörper, besonders in den koloristischen Pigmenteigenschaften. Das bedeutet, dass anorganische Buntpigmente auf Spinellbasis in den seltensten Fällen reine chemische Produkte darstellen.

Ein bekannter Stoff ist der Kobalt-Aluminium-Spinell, $CoAl_2O_4$, der z.B. mit $Cr^{III}$ modifiziert werden kann.

Diese Verbindung ist auch unter den Trivialnamen Kobaltblau, Leydener Blau, Königsblau und Thenards Blau bekannt. Sie findet in der Keramik Anwendung als blaue Farbkomponente und in der Kunststoffindustrie als Pigment zur Erzeugung von lichtechten und wetterfesten Einfärbungen.

Die üblichen Herstellungsverfahren von Kobalt-Pigmenten mit Spinellstruktur sind in der einschlägigen Literatur beschrieben. Dabei werden z.B. Kobaltoxid und Aluminiumoxid in Pulverform innig vermischt und bei Temperaturen um 1100 °C mehrere Stunden in Tiegeln kalziniert. Als Reaktionshilfsmittel werden häufig sog. Mineralisatoren benutzt, wie z.B. NaCl, KCl, $CaCl_2$ und $CaSO_4$. Solchermassen hergestellte Glühprodukte werden dann auf Pigmentfeinheit vermahlen. In der Vergrösserung wiesen diese Pigmente Kornformen auf, die denen von Basalsplit ähneln.

Ein alternatives Fällverfahren mit anschliessender Kalzination zur Herstellung von Kobaltblau ist in der DE-OS 2 840 870 beschrieben. Die Deckkraft dieser Pigmente ist jedoch wegen ihrer geringen Korngrösse sehr schlecht, man erhält nur transparente Blautöne.

Für viele Anwendungen ist es jedoch nötig, Pigmente mit hoher Deckkraft und grosser Ausgiebigkeit zu besitzen. Es war daher Aufgabe der vorstehenden Erfindung, ein anorganisches Pigment, insbesondere ein kobalthaltiges anorganisches Pigment, mit Spinellstruktur zu schaffen, das eine Deckkraft und eine grosse Ausgiebigkeit besitzt. Ausserdem sollte ein Verfahren zu Herstellung solcher Pigmente gefunden werden.

Diese Aufgabe wurde erfindungsgemäss dadurch gelöst, dass die Pigmente Plättchenform besitzen.

Vorteilhafterweise besitzen mindestens 50% der Pigmentteilchen einer Charge Plättchenform, insbesondere eine hexagonale Plättchenform. Man erhält dadurch Pigmente, die eine hohe Deckkraft und eine grosse Ausgiebigkeit aufweisen.

Vorzugsweise stellt man diese plättchenförmigen Spinelle dadurch her, dass die Komponenten auf bekannte Weise miteinander gemischt und bei Temperaturen oberhalb 1000°C geglüht werden, wobei aber das Gemisch während der Glühung kontinuierlich bewegt und weiter durchmischt wird. Das geschieht vorteilhafterweise in einem Drehrohrofen oder einem Hochtemperaturzyklon.

In den folgenden Beispielen werden zwei alternative Herstellungsverfahren von plättchenförmigen Kobalt-Blau-Pigmenten angeführt. Deren Farbe kann mit anderen Kationen in weiten Bereichen verändert werden. Die Auswahl der Beispiele auf Pigmente aus dem System Co-Al-O soll keine Beschränkung auf speziell dieses System darstellen.

### Beispiel 1

Kobalthydrat und Aluminiumhydrat werden so gemischt, dass ein molares Verhältnis $CoO:Al_2O_3$ = 1:1 erhalten wird. Vorzugsweise geschieht die Mischung nass, um eine homogene Mischung zu erhalten. Nach vollständiger Mischung der Komponenten wird der erhaltene Brei im Trockenschrank getrocknet.

Die trockene Rohmischung wird nun auf eine Feinheit von kleiner als 5 μm gemahlen. Dieses Pulver wird in einem hochtemperaturzyklon einer Blitzkalzinierung unterzogen.

Bei einer Materialverweilzeit von etwa 1,5 sec und einer Temperatur von etwa 1350°C erhält man ein plättchenförmiges Kobaltblau-Pigment, das als Hauptphase $CoAl_2O_4$ (Astm. Nr. 10-458) enthält. Diese Pigmentcharge, die weit über 50% Plättchen, vorzugsweise in hexagonaler Form, enthält, eignet sich hervorragend zur Einfärbung keramischer Glasuren und von Kunststoffartikeln.

### Beispiel 2

Die im Trockenschrank getrocknete Rohmischung des Beispiels 1 wird ohne weitere Zerkleinerung in einem Drehrohrofen kalziniert. Die Verweilzeit beträgt 20 Minuten bei einer Glühtemperatur von etwa 1100°C. Eventuell entstandene Agglomerate werden trocken desintegriert. Die Pigmente eignen sich für Anwendungen im keramischen und polymeren Sektor. Auch bei diesem Herstellungsverfahren entstehen fast ausschliesslich plättchenförmige Modifikationen des Kobalt-Blau-Pigments.

### Beispiel 3

24 kg Kobalthydroxid, 30 kg Aluminiumhydroxid und 19 kg Chromoxid werden nass unter Zusatz von Wasser gemischt. Nach vollständiger Trocknung der feuchten Mischung im Trockenschrank bei Temperaturen oberhalb 100°C wird verfahren wie im Beispiel 2 angegeben. Es wird ein blaugrünes Pigment mit guten koloristischen Eigenschaften erhalten, das sich durch einen grossen Anteil von Plättchen auszeichnet.

Die Teilchendurchmesser liegen bei diesen Herstellungsbeispielen im Bereich von 0,3 bis 1 µm und weisen eine Dicke von 0,05 bis 0,2 µm auf. Überraschend hierbei ist, dass die normalerweise im kubischen Kristallsystem kristallisierenden Pigmente Plättchen ausbilden, insbesondere hexagonale Plättchen.

## Patentansprüche

1. Anorganische Pigmente, insbesondere kobalthaltige anorganische Pigmente, mit Spinellstruktur und hoher Deckkraft, dadurch gekennzeichnet, dass die Pigmente Plättchenform besitzen.

2. Anorganische Pigmente nach Anspruch 1, dadurch gekennzeichnet, dass mindestens 50%· der Pigmentteilchen in Plättchenform vorliegen.

3. Anorganische Pigmente nach Anspruch 1 und 2, dadurch gekennzeichnet, dass die Pigmentteilchen eine hexagonale Plättchenform besitzen.

4. Anorganische Pigmente nach Anspruch 1 bis 3, dadurch gekennzeichnet, dass die Pigmentplättchen eine Dicke von 0,05 bis 0,2 µm und einen Teilchendurchmesser von 0,3 bis 1µm aufweisen.

5. Verfahren zur Herstellung anorganischer Pigmente mit Spinellstruktur nach Anspruch 1 bis 4, durch Mischen der Komponenten und Erhitzen auf Temperaturen oberhalb 1000°C, dadurch gekennzeichnet, dass das Gemisch während der Glühung kontinuierlich bewegt und kontinuierlich weiter durchmischt wird.

6. Verfahren zur Herstellung anorganischer Pigmente nach Anspruch 1 bis 5, dadurch gekennzeichnet, dass die Bewegung und weitere Durchmischung des Glühgutes in einem Drehrohrofen oder einem Hochtemperaturzyklon stattfindet.

## Claims

1. Inorganic pigments, in particular cobalt-containing inorganic pigments having spinel structure and a high covering power, characterised in that the pigments have platelet form.

2. Inorganic pigments according to claim 1, characterised in that at least 50% of the pigment particles are present in platelet form.

3. Inorganic pigments according to claims 1 and 2, characterised in that the pigment particles have a hexagonal platelet form.

4. Inorganic pigments according to claims 1 to 3, characterised in that the pigment platelets have a thickness of from 0.05 to 0.2 µm and a particle diameter of from 0.3 to 1 µm.

5. A process for the production of inorganic pigments having spinel structure according to claims 1 to 4 by mixing the components and heating to temperatures above 1000°C, characterised in that the mixture is moved continuously and is further mixed continuously during the calcining process.

6. A process for the production of inorganic pigments according to claims 1 to 5, characterised in that the movement and further mixing of the calcined material takes place in a tubular rotary kiln or in a high temperature cyclone.

## Revendications

1. Pigments minéraux, en particulier pigments minéraux contenant du cobalt ayant une structure de spinelle et un pouvoir couvrant élevé, caractérisé en ce que ces pigments présentent la forme de plaquettes.

2. Pigments minéraux suivant la revendication 1, caractérisé en ce qu'au moins 50% des particules de pigment se trouvent sous la forme de plaquettes.

3. Pigments minéraux suivant les revendications 1 et 2, caractérisés en ce que les particules de pigment possèdent la forme de plaquettes hexagonales.

4. Pigments minéraux suivant les revendications 1 à 3, caractérisés en ce que les plaquettes de pigments ont une épaisseur de 0,05 à 0,2 µm, et un diamètre de particules de 0,3 a 1 µm.

5. Procédé pour la fabrication de pigments minéraux ayant une structure de spinelle suivant les revendications 1 à 4, par mélange des composants, et chauffage à des températures supérieures à 1000°C, caractérisé en ce que, pendant la calcination, le mélange est maintenu continuellement en mouvement et continue à se mélanger.

6. Procédé pour la fabrication de pigments minéraux suivant les revendications 1 à 5, caractérisé en ce que le déplacement et le mélange intime de la matière, en cours de calcination, sont assurés dans un four tubulaire rotatif ou un cyclone à haute température.